# EUROPÄISCHE PATENTSCHRIFT

(11) **EP 2 605 933 B1**
(45) Veröffentlichungstag und Bekanntmachung des Hinweises auf die Patenterteilung: **21.02.2018**
(21) Anmeldenummer: 11738975.9
(22) Anmeldetag: 01.08.2011
(51) Int. Cl.: B60N 2/22, B60N 2/225, B60N 2/68

(54) **BESCHLAG FÜR EINEN FAHRZEUGSITZ**
FITTING FOR A VEHICLE SEAT
PIÈCE POUR SIÈGE DE VÉHICULE

(30) Priorität: 20.08.2010 DE 102010035377
(43) Veröffentlichungstag der Anmeldung: 26.06.2013
(73) Patentinhaber: Adient Luxembourg Holding S.à r.l., 2453 Luxembourg (LU)
(72) Erfinder: STILLEKE, Martin, 45657 Recklinghausen (DE); RABBACH, Andreas, 42697 Solingen (DE); BLASS, Eric, 42855 Remscheid (DE)
(74) Vertreter: Liedhegener, Ralf
(86) Internationale Anmeldenummer: PCT/EP2011/003856
(87) Internationale Veröffentlichungsnummer: WO 2012/022430

(56) Entgegenhaltungen:
- EP-A2- 1 055 550
- DE-U1-202009 015 235
- US-A1- 2010 072 802

## Beschreibung

Die Erfindung betrifft einen Beschlag für einen Fahrzeugsitz mit den Merkmalen des Oberbegriffs des Anspruches 1.

Aus der DE 10 2009 040 504 A1 ist ein Beschlag dieser Art bekannt, bei dem einerseits am Umklammerungsring und andererseits am zweiten Beschlagteil interne Anschläge ausgebildet sind, welche zur Begrenzung der Neigungseinstellung zusammenwirken. Das zweite Beschlagteil hat damit aber einen erhöhten Fertigungsaufwand, insbesondere wenn für die Fälle, in denen kein Bedarf an internen Anschlägen besteht, eine weitere Ausführung des zweiten Beschlagteils notwendig ist. Aus der DE 20 2009 015 235 ist ein Beschlag dieser Art bekannt, der alle Merkmale des Oberbegriffs des unabhängigen Anspruchs 1 offenbart.

Der Erfindung liegt die Aufgabe zu Grunde, einen alternativen Beschlag der eingangs genannten Art zu schaffen. Diese Aufgabe wird erfindungsgemäß durch einen Beschlag mit den Merkmalen des Anspruches 1 gelöst. Vorteilhafte Ausgestaltungen sind Gegenstand der Unteransprüche.

Die Verlagerung des Sperranschlags vom zweiten Beschlagteil auf das Strukturteil reduziert den Fertigungsaufwand für das zweite Beschlagteil. Da das Strukturteil (oder der Adapter) in der Regel individuell für den bestimmten Fahrzeugsitz ausgebildet wird, ist hierfür kein merklich erhöhter Fertigungsaufwand nötig. Das Abstehen der Begrenzungsanschläge vom Umklammerungsring und das Vorsehen des Sperranschlags am Strukturteil verlagern die Anschlagflächen radial nach außen, so dass größere Momente aufgenommen werden können oder bei gleichem Moment sich die Anschlagskräfte reduzieren. Eine vorteilhafte Kombination ergibt sich, wenn die Begrenzungsanschläge eine Stufe aufweisen, welche als Zentrierabschnitt des Umklammerungsrings auf dem ersten Beschlagteil (vor der Befestigung aneinander) dient. Das Vorsehen der Begrenzungsanschläge am Umklammerungsring hat gegenüber Begrenzungsanschlägen an dem am ersten Beschlagteil befestigten (und dadurch mit dem Umklammerungsring fest verbundenen) Strukturteil oder Adapter den Vorteil, dass die Variantenbildung für die Anschläge am Umklammerungsring erfolgt, während das beispielsweise lehnenfeste, am ersten Beschlagteil befestigte, gegenüber dem Umklammerungsring in der Regel deutlich größere Strukturteil (oder der entsprechende Adapter) diesbezüglich ein Gleichteil bleiben kann, was die Werkzeugkosten gering hält. Zudem haben die radial abstehenden Begrenzungsanschläge gegenüber den in der Mantelfläche des Umklammerungsrings ausgebildeten Begrenzungsanschlägen den Vorteil, dass sie das Material des Umklammerungsrings ungeschwächt lassen.

Die Verwendung eines Exzenterumlaufgetriebes im Beschlag zwischen einem ersten Beschlagteil und einem zweiten Beschlagteil erlaubt eine stufenlose Neigungseinstellung der Lehne. Die Einsparung eines zentralen Ritzels gegenüber einem Planetenumlaufgetriebe führt zur Entstehung einer Taumelbewegung, die der relativen Drehung der Beschlagteile überlagert ist. Das Exzenterumlaufgetriebe kann manuell oder motorisch angetrieben werden.

Der Grundanteil zum Sperren des Exzenterumlaufgetriebes wird durch die Reibung zwischen dem Exzenter und einem der beiden Beschlagteile aufgebracht, vorzugsweise dem zweiten Beschlagteil, welches vorzugsweise einen Kragen zum Abstützen des Exzenters aufweist. Die Keilsegmente, welche den Exzenter definieren, dienen sowohl dem Sperren als auch dem Antreiben der Abwälzbewegung von Zahnrad und Zahnkranz. Ein vorzugsweise zusätzlich vorgesehenes Sperrelement dient dem Sperren des Beschlags unter dynamischen Belastungen.

Die Ausbildung des Zahnkranzes an dem den Exzenter aufnehmenden ersten Beschlagteil und die Ausbildung des Zahnrades an dem den Exzenter abstützenden zweiten Beschlagteil spart Material und Bauraum, indem das Zahnrad am radial äußeren Rand des zweiten Beschlagteils ausgebildet werden kann (welches dann der am ersten Beschlagteil befestigte Umklammerungsring übergreift) und trotzdem ausreichend große Verbindungsbereiche am zweiten Beschlagteil zur Montage des Beschlags zur Verfügung stehen.

Die Erfindung ist zwischen Beschlägen und Strukturteilen bei Fahrzeugsitzen einsetzbar, kann aber auch zwischen anderen Bestandteile eines Fahrzeugsitzes verwendet werden.

Im folgenden ist die Erfindung anhand eines in der Zeichnung dargestellten Ausführungsbeispiels mit Abwandlungen näher erläutert. Es zeigen
- Fig. 1: eine perspektivische Ansicht des Beschlags mit sitzteilfestem Adapter,
- Fig. 2: eine andere perspektivische Ansicht des sitzteilfesten Adapters, eines zweiten Beschlagteils und zweier alternativer Umklammerungsringe,
- Fig. 3: eine Ansicht des Umklammerungsrings,
- Fig. 4: einen Schnitt entlang der Linie IV-IV in Fig. 3,

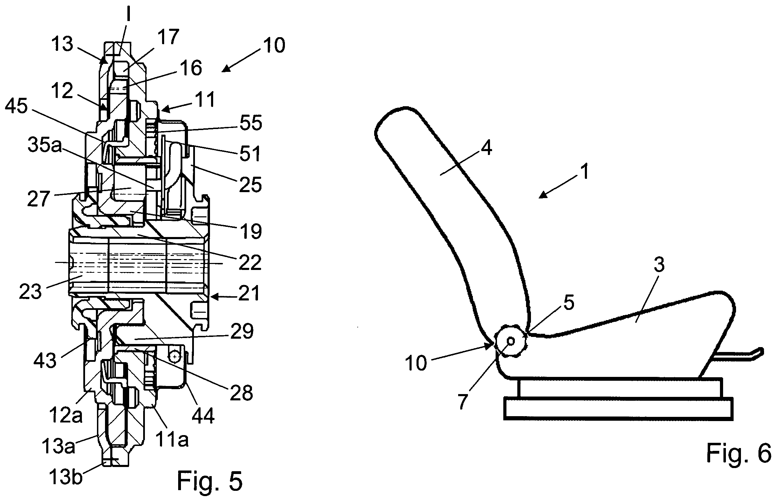

- Fig. 5: einen Schnitt durch den Beschlag,
- Fig. 6: eine schematische Darstellung eines Fahrzeugsitzes,

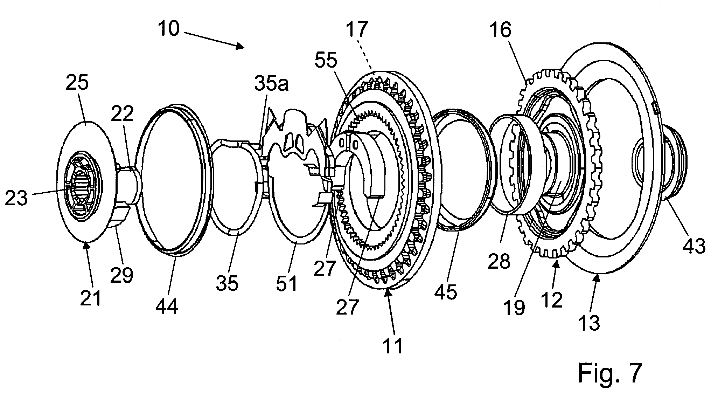

- Fig. 7: eine Explosionsdarstellung des Beschlags, dessen Begrenzungsanschläge verdeckt sind,
- Fig. 8: eine perspektivische Ansicht eines abgewandelten Umklammerungsrings, und
- Fig. 9: eine perspektivische Ansicht eines weiteren abgewandelten Umklammerungsrings.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handrades 5, oder motorisch, beispielsweise mittels eines Elektromotors, eine Antriebswelle 7 gedreht, welche horizontal im Übergangsbereich zwischen Sitzteil 3 und Lehne 4 angeordnet ist. Auf beiden Seiten des Fahrzeugsitzes 1 greift die Antriebswelle 7 drehfest in jeweils einen Beschlag 10 ein. Die Antriebswelle 7 definiert die verwendeten Richtungsangaben eines Zylinderkoordinatensystems.

Der Beschlag 10 weist ein erstes Beschlagteil 11 und ein zweites Beschlagteil 12 auf, welche relativ zueinander verdrehbar sind. Die beiden Beschlagteile 11 und 12 lassen sich jeweils näherungsweise in eine kreisrunde Scheibenform einbeschreiben. Beide Beschlagteile 11 und 12 bestehen vorzugsweise aus Metall, insbesondere Stahl, der wenigstens bereichsweise gehärtet sein kann. Zur Aufnahme der axial wirkenden Kräfte, also zum Zusammenhalt der Beschlagteile 11 und 12, ist ein Umklammerungsring 13 vorgesehen. Das Prinzip eines solchen Zusammenhalts mittels eines Umklammerungsrings ist beispielsweise in der US 6,799,806 B2 beschrieben. Der Umklammerungsring 13 besteht vorzugsweise aus Metall, insbesondere Stahl, der vorzugsweise ungehärtet ist. Der Umklammerungsring 13 weist eine im wesentlichen flache Ringform auf, vorliegend mit einem (radial) inneren Ringabschnitt 13a, einem (radial) äußeren Ringabschnitt 13b, optional wenigstens einem Zentrierabschnitt 13c und gegebenenfalls Verbindungsabschnitten dazwischen.

Der Umklammerungsring 13 ist fest mit einem der beiden Beschlagteile 11 und 12 verbunden, vorliegend im äußeren Ringabschnitt 13b mit dem ersten Beschlagteil 11, beispielsweise verschweißt oder in alternativer Ausführung (in Umfangsrichtung wenigstens teilweise) umgebördelt. Mittels seines radial nach innen weisenden Randes, d.h. vorliegend des in einer zu axialen Richtung senkrechten Ebene angeordneten, inneren Ringabschnitts 13a, übergreift der Umklammerungsring 13, gegebenenfalls unter Zwischenlage eines separaten Gleitrings, das relativ zu ihm bewegliche, andere der beiden Beschlagteile 11 und 12 radial außen (d.h. in dessen radial äußerem Randbereich), ohne die Relativdrehung der beiden Beschlagteile 11 und 12 zu behindern. Zudem werden die einander zugewandten Innenflächen der beiden Beschlagteile 11 und 12 vor dem Eindringen von Fremdkörpern und der Verschmutzung und Beschädigung geschützt.

Der äußere Ringabschnitt 13b kann in einer zum inneren Ringabschnitt 13a axial geringfügig (beispielsweise um die Materialstärke des Gleitrings) zum ersten Beschlagteil 11 hin versetzten Ebene angeordnet oder im Profil in einem bestimmten Winkel zum inneren Ringabschnitt 13a abgeknickt sein. Es ist aber auch möglich, dass der äußere Ringabschnitt 13b und der innere Ringabschnitt 13a flach (d.h. ohne Stufe und/oder Knick und damit unmerklich) ineinander übergehen, also lediglich durch ihre jeweilige Nachbarschaft zu den unterschiedlichen Beschlagteilen 11 und 12 definiert sind. Mittels des äußere Ringabschnitts 13b liegt der Umklammerungsring 13 - vorzugsweise flächig - am ersten Beschlagteil 11 an dessen Innenfläche an, genauer gesagt an dessen innerer Stirnseite in einem radial äußeren Randabschnitt, und ist dort am ersten Beschlagteil 11 befestigt.

Der Umklammerungsring 13 und das mit ihm fest verbundene Beschlagteil 11 oder 12 umklammern also das relativ zu ihnen bewegliche, andere der beiden Beschlagteile 11 und 12. In baulicher Hinsicht bilden die beiden Beschlagteile 11 und 12 daher zusammen (mit dem Umklammerungsring 13) eine scheibenförmige Einheit.

Der optionale Zentrierabschnitt 13c erstreckt sich gegenüber dem äußeren Ringabschnitt 13b in axialer Richtung vorzugsweise um maximal eine Materialstärke des Umklammerungsrings 13. Der Zentrierabschnitt 13c übergreift das erste Beschlagteil 11 radial außen, d.h. der Zentrierabschnitt 13c überdeckt das erste Beschlagteil 11 teilweise auf dessen Außenfläche, genauer gesagt im zylindrischen Bereich seiner Außenfläche. Der Zentrierabschnitt 13c kann angeprägt sein (d.h. das Material am Rand des äußeren Ringabschnittes 13b wird in axialer Richtung vorgeschoben, beispielsweise um eine halbe Materialstärke des Umklammerungsrings 13). Der Zentrierabschnitt 13c kann auch durch eine Randumstellung ausgebildet werden (d.h. das Material am Rand des äußeren Ringabschnittes 13a wird um 90° umgebogen). In Umfangsrichtung kann der Zentrierabschnitt 13c vollständig geschlossen umlaufen, oder unterbrochen sein, beispielsweise lediglich in zwei breiteren Bogenstücken, in drei schmaleren Bogenstücken oder in ein schmales Bogenstück und zwei breite Bogenstücke. In allen Fällen dient der Zentrierabschnitt 13c dazu, den Umklammerungsring 13 vor der Befestigung am ersten Beschlagteil 11 exakt zu positionieren, nämlich konzentrisch zum ersten Beschlagteil 11. Zusätzlich erhöht der Zentrierabschnitt 13c die Festigkeit des fertig zusammengebauten Beschlags 10. In der in Umfangsrichtung vollständig umlaufenden Variante schützt der Zentrierabschnitt 13c vor der Positionierung am ersten Beschlagteil 11 die Ringform des Umklammerungsrings 13 vor Verformungen durch axial wirkende Kräfte, beispielsweise beim Transport nach dem Ausstanzen.

Die Befestigung des Umklammerungsrings 13 am ersten Beschlagteil 11 kann mittels Laserschweißens oder mittels einer anderen an sich bekannten Befestigungstechnik erfolgen. Im Falle des Laserschweißens kann beispielsweise eine I-Naht I an einem Stumpfstoß, beispielsweise zwischen dem äußeren Ringabschnitt 13b und dem ersten Beschlagteil 11, oder eine I-Naht I an einem Überlappstoß erzeugt werden ("Durchstich"), und zwar aus axialer oder aus radialer Richtung. Die I-Naht I kann über den Umfang verteilt mit mehreren einzelnen, unterbrochenen Schweißnahtabschnitten oder mit einer einzigen, umlaufenden Schweißnaht ausgebildet sein.

Mit der Montage des Beschlags 10 ist das erste Beschlagteil 11 beispielsweise fest mit der Struktur der Lehne 4 verbunden, also lehnenfest. Das zweite Beschlagteil 12 ist dann fest mit der Struktur des Sitzteils 3 verbunden, also sitzteilfest. Diese Zuordnungen der Beschlagteile 11 und 12 sind bevorzugt, wenn die radialen Abstände der Befestigungspunkte zwischen dem Beschlag 10 und einem relativ dünnen Lehnenblech als Lehnenseitenholm möglichst groß sein sollen. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest. Der Beschlag 10 liegt im Kraftfluss zwischen Lehne 4 und Sitzteil 3.

Für eine definierte Schnittstelle des Beschlags 10 zu den Strukturen von Sitzteil 3 und Lehne 4, sind an den beiden Beschlagteilen 11 und 12 axial vorspringende Konturen vorgesehen, welche formschlüssig mit entsprechenden Öffnungen in Strukturteilen des Sitzteils 3 und der Lehne 4, beispielsweise in kundenspezifischen Adaptern oder direkt im Sitzrahmen-Seitenteil oder Lehnenseitenholm, zusammenwirken. Stellvertretend für ein derartiges Strukturteil 3a ist im vorliegenden Ausführungsbeispiel ein sitzteilfester Adapter verwendet. Der so vorpositionierte Beschlag 10 kann dann an dem jeweiligen Strukturteil befestigt werden, beispielsweise durch Laserschweißen oder MAG-Schweißen. Beim Laserschweißen kann zwischen dem Beschlag 10 und dem Strukturteil 3a eine I-Naht I als umlaufende (oder stellenweise unterbrochene) Schweißnaht vorgesehen sein. Die I-Naht I kann im Stumpfstoß zwischen der axial vorspringenden Kontur und dem Rand der die Kontur aufnehmenden Öffnung oder im Überlappstoß vorgesehen sein. Beim MAG-Schweißen ist die Schweißnaht vorzugsweise nur an einzelnen, ausgezeichneten Stellen entlang des Stumpfstoßes vorgesehen. Gegebenenfalls ist der Stumpfstoß teilweise mit einem Freiraum aufgeweitet, indem der Rand der Öffnung mit einer Stufe oder Fase versehen ist, so dass die Schweißnaht besser dazwischen eindringen kann und auch in radialer Richtung besser verbindend wirkt.

Vorliegend ist am ersten Beschlagteil 11 - auf seiner vom zweiten Beschlagteil 12 abgewandten Stirnseite - ein kreisförmiger Ringabsatz 11a ausgebildet, beispielsweise durch eine Materialausstellung beim Prägen des ersten Beschlagteiles 11. Der Ringabsatz 11a greift formschlüssig durch eine kreisförmige Öffnung im Lehnenseitenholm, so dass der Lehnenseitenholm in dem radial außerhalb des Ringabsatzes 11a angeordneten Teil der Stirnseite des ersten Beschlagteils 11 in Anlage an das erste Beschlagteil 11 kommt. Entlang der Außenkante des Ringabsatzes 11a ist dann eine Schweißnaht angebracht. Im Falle des Laserschweißens kann die Schweißnaht um den kreisringförmigen Verlauf der Außenkante des Ringabsatzes 11a pendeln.

Am zweiten Beschlagteil 12 ist vorliegend- auf seiner vom ersten Beschlagteil 11 abgewandten Stirnseite - ein Sternabsatz 12a ausgebildet. Der Sternabsatz 12a weist eine mehrarmige, im wesentlichen symmetrische Sternform auf (vorliegend ein vierarmiges Kreuz). Die im wesentlichen symmetrische Sternform kann exakt symmetrisch sein oder hierzu eine Abweichung aufweisen, deren Abmessung gering im Vergleich zu den (radialen) Abmessungen des Sternabsatzes 12a ist, und mittels deren (zusätzlich zur Sternform) eine Positionierhilfe oder Verdrehsicherung geschaffen wird, die den Formschluss mit dem Strukturteil 3a in genau eine möglich Ausrichtung zwingt.

Beim vorliegenden Sternabsatz 12a schließt jeder Arm mit konvexen Bogen (und einem geraden Stück) ab, und die Arme gehen vorliegend jeweils tangential mit konkavem Bogen (und einem geraden Stück) ineinander über. Bevorzugt sind Kreisbögen, also mit konstanter Krümmung, jedoch sind auch andere, insbesondere trigonometrische, Bögen denkbar. In der Mitte des Sternabsatzes 12a ist vorliegend aus Bauraumgründen eine weitere Ausstellung vorgesehen. Der Sternabsatz 12a greift formschlüssig durch eine genau passende Öffnung im sitzteilfesten Adapter (oder im Sitzrahmen), so dass der sitzteilfeste Adapter (oder der Sitzrahmen) in dem radial außerhalb des Sternabsatzes 12a angeordneten Teil der Stirnseite des zweiten Beschlagteils 12 in Anlage an das zweite Beschlagteil 12 kommt. Entlang der Außenkante des Sternabsatzes 12a ist dann eine Schweißnaht angebracht. Im Falle des Laserschweißens kann diese Schweißnaht um die Außenkante des Sternabsatzes 12a pendeln. Im Falle des MAG-Schweißens ist beispielsweise am Abschluß jeden Armes eine kurze Schweißnaht vorgesehen.

Der Sternabsatz 12a hat den Vorteil, dass bei seiner Ausbildung nur ein Teil des Materials des zweiten Beschlagteils 12 ausgestellt (herausgedrückt) werden muss, und trotzdem relativ große Abstände der Befestigungspunkte entstehen. Zudem kann bedarfsweise (durch die Sternform und gegebenfalls durch Abweichung von der exakten Symmetrie) eine bestimmte Ausrichtung des zweiten Beschlagteils 12 erzwungen werden. In einer abgewandelten Ausführung ist auch am ersten Beschlagteil 11 ein Sternabsatz anstelle des Ringabsatzes 11a vorgesehen.

Um den Einstellbereich bei der Neigungseinstellung der Lehne 4 nach vorne und/oder hinten zu begrenzen, d.h. die relative Verdrehung des ersten Beschlagteils 11 und des zweiten Beschlagteils 12 zu begrenzen, sind Anschläge vorgesehen, von denen jeweils wenigstens einer mit einem der Beschlagteile 11 oder 12 - direkt oder indirekt - fest verbunden ist. Vorliegend steht von dem am zweiten Beschlagteil 12 befestigten Strukturteil 3a (genau) ein Sperranschlag 15 axial ab, den (genau) zwei Begrenzungsanschläge 13g (des am ersten Beschlagteil 11 befestigten Umklammerungsrings 13) in Umfangsrichtung zwischen sich aufnehmen. Die Anzahl und Funktion der Anschläge kann auch umgekehrt sein. Die zwei Begrenzungsanschläge 13g stehen vom äußeren Ringabschnitt 13b des Umklammerungsrings 13 radial - und gegebenenfalls zusätzlich in Umfangsrichtung - nach außen ab. Der Sperranschlag 15 ist vorzugsweise am Strukturteil 3a angeformt, beispielsweise aus dem Strukturteil 3a ausgestellt. Der Sperranschlag 15 kann auch separat ausgebildet und am Strukturteil 3a befestigt, insbesondere angeschweißt, sein. Die beiden in Umfangsrichtung weisenden Seiten 15' des Sperranschlags 15, welche vorliegend durch das Ausstellen J-förmig sind, dienen als Anschlagflächen.

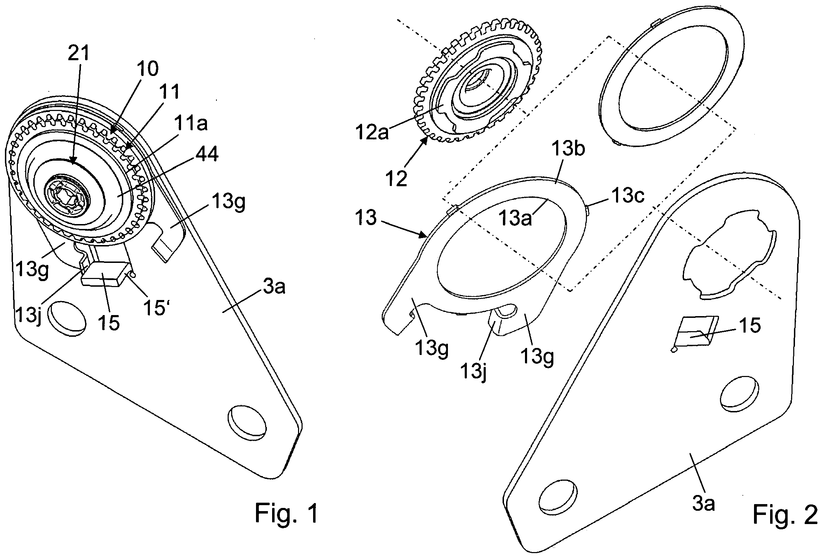

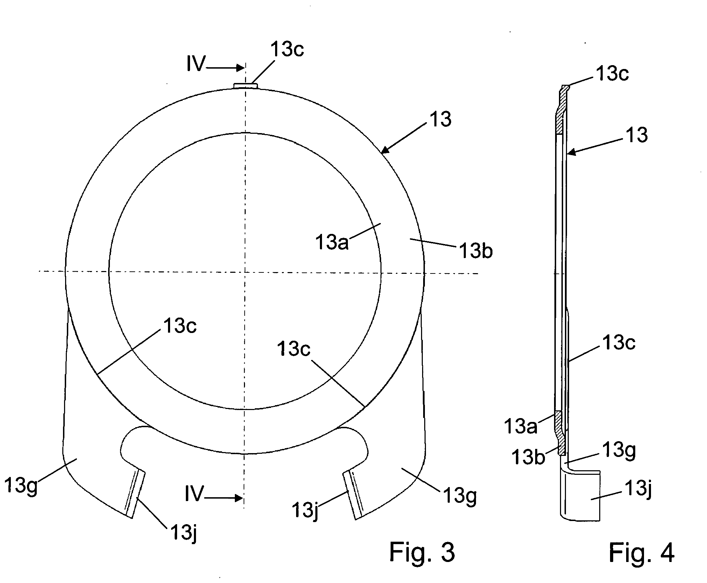

Die Begrenzungsanschläge 13g sind vorzugsweise am Umklammerungsring 13 angeformt, d.h. als einstückiger Bestandteil desselben ausgebildet, können aber auch separat ausgebildet und an diesem befestigt sein. Der Zentrierabschnitt 13c und die Begrenzungsanschläge 13g können unabhängig voneinander am äußeren Ringabschnitt 13b des Umklammerungsrings 13 (Fig. 2) angeordnet sein (wobei der Zentrierabschnitt 13c auch entfallen kann), oder die beiden breiten Bogenstücke des Zentrierabschnitts 13c bilden den Übergang zu den beiden Begrenzungsanschlägen 13g (Fig. 3+4), d.h. die Begrenzungsanschläge 13g sind am Zentrierabschnitt 13c angeformt und bezüglich des äußeren Ringabschnitts 13b abgestuft. Die Begrenzungsanschläge 13g sind hakenförmig ausgebildet mit einem radial und/oder in Umfangsrichtung abstehenden Teil, einem dazu (vorzugsweise) senkrechten Teil, der zum jeweils anderen Begrenzungsanschlag 13g hinweist, und einem dazu senkrechten, d.h. in axialer Richtung abstehenden Teil mit einer in Umfangsrichtung weisenden Anschlagfläche 13j für den Sperranschlag 15 (und dessen Seiten 15').

Es ist denkbar, einen Baukasten für die verschiedenen Anwendungen bereitzustellen (Fig. 2), aus dem alternativ entweder ein Umklammerungsring 13 ohne Anschläge oder ein Umklammerungsring 13 mit Begrenzungsanschlägen 13g gewählt werden kann, und hierzu passend ein sitzteilfester Adapter 3a ohne oder mit Sperranschlag 15.

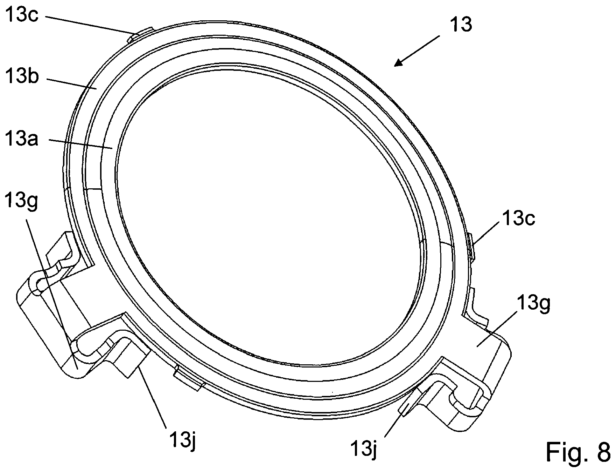

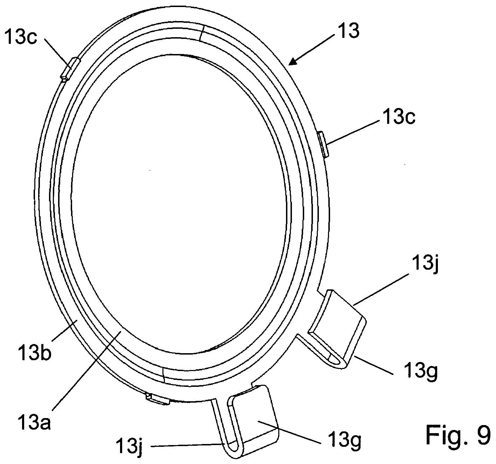

In Fig. 8 ist ein abgewandelter Umklammerungsring 13" dargestellt, dessen beide Begrenzungsanschläge 13g - in Umfangsrichtung beidseitig - jeweils eine radiale Abkröpfung aufweisen. Das jeweilige in Umfangsrichtung weisende, freie Ende der Abkröpfungen dient als Anschlagfläche 13j. Die Abkröpfung stellt eine Feder dar, so dass sich eine sanfte Anlage der Anschlagfläche 13j an den Sperranschlag 15 ergibt. In Fig. 9 ist ein weiterer abgewandelter Umklammerungsring 13"' dargestellt, dessen beide Begrenzungsanschläge 13g in axialer Richtung umgebogen sind. Dadurch ergeben sich U-förmige Anschlagflächen 13j.

Der Beschlag 10 ist als Getriebebeschlag ausgebildet, bei welchem das erste Beschlagteil 11 und das zweite Beschlagteil 12 mittels eines Getriebes zum Verstellen und Feststellen miteinander verbunden sind, genauer gesagt mittels eines - vorliegend selbsthemmenden - Exzenterumlaufgetriebes, wie es beispielsweise in der DE 44 36 101 A1 beschrieben ist.

Zur Ausbildung des Getriebes ist am zweiten Beschlagteil 12 ein außenverzahntes Zahnrad 16 und am ersten Beschlagteil 11 ein innenverzahnter Zahnkranz 17 ausgebildet, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Ein entsprechender Unterschied der Zähneanzahl von Zahnrad 16 und Zahnkranz 17 von wenigstens einem Zahn ermöglicht eine Abwälzbewegung des Zahnkranzes 17 am Zahnrad 16. Die Ausbildung von Zahnrad 16 und Zahnkranz 17 erfolgt vorzugsweise mittels eines einzigen Präge-Stanz-Vorgangs, der zugleich die Beschlagteile 11 und 12 aus ihrem Ausgangsmaterial ausstanzt. Alternativ können die Beschlagteile 11 und 12 - mit ähnlichen Geometrien und gleichen Funktionen - durch Massivumformung (vorzugsweise Kaltfließpressen oder Warmfließpressen) hergestellt werden. Vorliegend bildet das Zahnrad 16 den radial äußeren Rand des zweiten Beschlagteils 12, d.h. das zweite Beschlagteil 12 schließt radial außen mit dem Zahnrad 16 ab.

Eines der beiden Beschlagteile 11 und 12 weist einen Kragen 19 auf, vorliegend das zweite Beschlagteil 12 konzentrisch zum Zahnrad 16. Der Kragen 19 kann als Kragenzug an dem besagten Beschlagteil angeformt (d.h. einstückig ausgebildet) oder als separate Hülse daran befestigt sein. Im Kragen 19 ist ein Mitnehmer 21 mittels einer Nabe 22 drehbar gelagert. Der Mitnehmer 21 besteht vorzugsweise aus Kunststoff. Die Nabe 22 des Mitnehmers 21 ist zentral mit einer Bohrung 23 zur Aufnahme der Antriebswelle 7 versehen. Das Profil der Bohrung 23 ist passend zum Profil der Antriebswelle 7, vorliegend einem Keilwellenprofil, ausgebildet. Im Anschluss an seine Nabe 22 weist der Mitnehmer 21 eine einstückig mit der Nabe 22 ausgebildete Abdeckscheibe 25 mit größerem Durchmesser als die Nabe 22 auf.

Auf dem Kragen 19 sind zwei Keilsegmente 27 - mit ihren gekrümmten Innenflächen - abgestützt, die - mit ihren gekrümmten Außenflächen - das andere der beiden Beschlagteile 11 und 12, vorliegend das erste Beschlagteil 11, lagern. Hierfür ist eine Aufnahme des letztgenannten Beschlagteils mit einer vorzugsweise drehfest eingepressten Gleitlagerbuchse 28 ausgekleidet, an der die Außenflächen der Keilsegmente 27 anliegen. Die Begriffe "abstützen" und "lagern" sollen nicht auf eine bestimmte Richtung des Kraftflusses durch den Beschlag 10 beschränkt sein, da diese Richtung von der Montage des Beschlags 10 abhängt.

Der Mitnehmer 21 weist - radial beabstandet zur Nabe 22 - ein mit Spiel zwischen die Schmalseiten der Keilsegmente 27 fassendes Mitnehmersegment 29 auf, welches mit der Abdeckscheibe 25 und mit der Nabe 22 einstückig ausgebildet ist. Die Keilsegmente 27, deren Breitseiten einander zugekehrt sind, nehmen, beispielsweise mit je einer Öffnung oder einer durch vorspringende Materialpartien definierten Ausnehmung, jeweils einen abgewinkelten Endfinger 35a einer Omega-förmigen Feder 35 auf. Die Feder 35 beaufschlagt die Keilsegmente 27 in Umfangsrichtung, insbesondere um sie auseinander zu drücken, wobei im Betrieb die Breitseiten der Keilsegmente 27 einander berühren und beaufschlagen können.

Der Mitnehmer 21 wird auf der Außenseite des den Kragen 19 aufweisenden Beschlagteils durch einen vorzugsweise aufgeclipsten Sicherungsring 43 axial gesichert. Der Sicherungsrings 43 erstreckt sich in axialer Richtung entlang eines Teiles der Nabe 22, so dass die Nabe 22 nicht direkt an der Innenseite des Kragens 19 anliegt, sondern unter Zwischenlage des Sicherungsrings 43 im Kragen 19 gelagert ist (und dadurch der Mitnehmer 21 am zweiten Beschlagteil 12 gelagert ist). Auf der Außenseite des die Gleitlagerbuchse 28 aufweisenden Beschlagteils (vorliegend des ersten Beschlagteils 11) ist zwischen dessen radial äußerem Rand und der Abdeckscheibe 25 ein Dichtring 44 vorgesehen, beispielsweise aus Gummi oder weichem Kunststoff, der mit der Abdeckscheibe 25 verbunden ist, insbesondere verclipst ist. Der Dichtring 44 kann auch aus Metall ausgebildet und mit dem ersten Beschlagteil 11 fest verbunden, beispielsweise verschweißt, sein, wobei dann die Abdeckscheibe 25 relativ zum Dichtring 44 beweglich ist. Innerhalb des Bauraums zwischen den beiden Beschlagteilen 11 und 12 ist optional ein Trennring 45 als interne Dichtung vorgesehen, welcher beispielsweise aus Kunststoff besteht.

Durch die Keilsegmente 27 (und die Feder 35) wird ein Exzenter definiert, welcher in Verlängerung der Richtung der Exzentrizität das Zahnrad 16 an einer Eingriffsstelle in den Zahnkranz 17 drückt. Bei einem Antrieb durch die sich (mehrfach) drehende Antriebswelle 7 wird ein Drehmoment zunächst auf den Mitnehmer 21 und mittels des Mitnehmersegments 29 dann auf den so definierten Exzenter übertragen, welcher entlang der Gleitlagerbuchse 28 gleitet unter Verlagerung der Richtung der Exzentrizität und damit unter Verlagerung der Eingriffsstelle des Zahnrades 16 im Zahnkranz 17, was sich als taumelnde Abwälzbewegung darstellt, d.h. als Relativdrehung mit überlagerter Taumelbewegung. Die Neigung der Lehne 4 ist dadurch zwischen mehreren Gebrauchsstellungen stufenlos einstellbar.

Bei Anlage eines der Begrenzungsanschläge 13g an den Sperranschlag 15 wird die Abwälzbewegung und damit die Einstellung der Neigung der Lehne 4 abgebrochen.

Zur Verbesserung des dynamischen Betriebsverhaltens ist vorzugsweise noch als Sperrelement eine Sperrfeder 51 vorgesehen, wie sie beispielsweise in der DE 195 48 809 C1 offenbart ist. Die Sperrfeder 51 wirkt vorliegend mit einer Verzahnung 55 zusammen, die als weiterer Zahnkranz am ersten Beschlagteil 11 ausgebildet ist. Die - vorzugsweise auf einem axialen Überstand der Gleitlagerbuchse 28 beweglich gelagerte - Sperrfeder 51 sperrt jeweils die Keilsegmente 27 im nicht-angetriebenen Zustand (indem die Sperrfeder 51 mittels Anlage an die Endfinger 35a die Feder 35 sperrt) und wird durch den angetriebenen Mitnehmer 21 gelöst.

Die erfindungsgemäßen Anschläge wurden für einen Getriebebeschlag beschrieben, sind aber auch für Rastbeschläge verwendbar, wie sie beispielsweise aus der DE 20 2009 015 235 U1 bekannt sind.

### Bezugszeichenliste

- 1: Fahrzeugsitz
- 3: Sitzteil
- 3 a: Strukturteil
- 4: Lehne
- 5: Handrad
- 7: Antriebswelle
- 10: Beschlag
- 11: erstes Beschlagteil
- 12: zweites Beschlagteil
- 12a: Sternabsatz
- 13. 13", 13"': Umklammerungsring
- 13a: innerer Randabschnitt
- 13b: äußerer Randabschnitt
- 13c: Zentrierabschnitt
- 13g: Begrenzungsanschlag
- 13j: Anschlagfläche
- 15: Sperranschlag
- 15': Seite
- 16: Zahnrad
- 17: Zahnkranz
- 19: Kragen
- 21: Mitnehmer
- 22: Nabe
- 23: Bohrung
- 25: Abdeckscheibe
- 27: Keilsegment
- 28: Gleitlagerbuchse
- 29: Mitnehmersegment
- 35: Feder
- 35a: Endfinger
- 43: Sicherungsring
- 44: Dichtring
- 45: Trennring
- 51: Sperrfeder
- 55: Verzahnung
- I: I-Naht

## Patentansprüche

1. Beschlag für einen Fahrzeugsitz, insbesondere für einen Kraftfahrzeugsitz, mit einem ersten Beschlagteil (11) und einem zweiten Beschlagteil (12), welche relativ zueinander verdrehbar sind, einem Umklammerungsring (13), welcher - zum axialen Zusammenhalt der beiden Beschlagteile (11, 12) - mittels eines äußeren Ringabschnitts (13b) am ersten Beschlagteil (11) befestigt ist und mittels eines inneren Ringabschnitts (13a) das zweite Beschlagteil (12) übergreift, und Anschlägen (13g, 15), welche der Begrenzung der relativen Drehung der beiden Beschlagteile (11, 12) dienen und welche wenigstens einen mit dem zweiten Beschlagteil (12) verbundenen Sperranschlag (15) umfassen, der an einem am zweiten Beschlagteil (12) befestigten Strukturteil (3a) vorgesehen ist, **dadurch gekennzeichnet, dass** die Anschläge wenigstens einen am Umklammerungsring (13) ausgebildeten Begrenzungsanschlag (13g) umfassen und dass der Begrenzungsanschlag (13g) vom äußeren Ringabschnitt (13b) des Umklammerungsrings (13) nach außen absteht.

2. Beschlag nach Anspruch 1, **dadurch gekennzeichnet, dass** der Begrenzungsanschlag (13g) hakenförmig ausgebildet ist mit einem wenigstens radial vom Umklammerungsring (13) abstehenden Teil und wenigstens einem hiervon abstehenden Teil mit einer in Umfangsrichtung weisenden Anschlagfläche (13j) für den Sperranschlag (15).

3. Beschlag nach Anspruch 1 oder 2, **dadurch gekennzeichnet, dass** der Begrenzungsanschlag (13g) am äußeren Ringabschnitt (13b) des Umklammerungsrings (13) angeformt oder befestigt ist.

4. Beschlag nach einem der vorhergehenden Ansprüche, **dadurch gekennzeichnet, dass** der Umklammerungsring (13) wenigstens einen Zentrierabschnitt (13c) aufweist, welcher sich axial vom äußeren Ringabschnitt (13b) erstreckt und welcher das erste Beschlagteil (11) radial außen übergreift und dessen Außenfläche teilweise überdeckt.

5. Beschlag nach Anspruch 3 und 4, **dadurch gekennzeichnet, dass** der Begrenzungsanschlag (13g) mittels des Zentrierabschnitts (13c) als Übergang am äußeren Ringabschnitt (13b) des Umklammerungsrings (13) angeformt ist.

6. Beschlag nach einem der vorhergehenden Ansprüche, **dadurch gekennzeichnet, dass** der Sperranschlag (15) am Strukturteil (3a) angeformt ist.

7. Beschlag nach einem der vorhergehenden Ansprüche, **dadurch gekennzeichnet, dass** genau zwei Begrenzungsanschläge (13g) den genau einen Sperranschlag (15) in Umfangsrichtung zwischen sich aufnehmen, oder dass genau zwei Sperranschläge (15) den genau einen Begrenzungsanschlag (13g) in Umfangsrichtung zwischen sich aufnehmen.

8. Beschlag nach einem der vorhergehenden Ansprüche, **dadurch gekennzeichnet, dass** der äußere Ringabschnitt (13b) in einer zum inneren Ringabschnitt (13a) axial zum ersten Beschlagteil (11) hin versetzten Ebene angeordnet ist, oder dass der äußere Ringabschnitt (13b) und der inneren Ringabschnitt (13a) flach ineinander übergehen.

9. Beschlag nach einem der vorhergehenden Ansprüche, **dadurch gekennzeichnet, dass** an einem der Beschlagteile (11, 12) ein Zahnkranz (17) und am anderen der Beschlagteile (11, 12) ein Zahnrad (16) ausgebildet ist, welche miteinander kämmen, wodurch die beiden Beschlagteile (11, 12) miteinander in Getriebeverbindung stehen, und dass ein drehbar gelagerter, von einem Mitnehmer (21) angetriebener, umlaufender Exzenter (27) zum Antrieb einer relativen Abwälzbewegung von Zahnrad (16) und Zahnkranz (17) vorgesehen ist.

10. Fahrzeugsitz, insbesondere Kraftfahrzeugsitz, mit einem Beschlag nach einem der vorhergehenden Ansprüche.

## Claims

1. Fitting for a vehicle seat, in particular for a motor vehicle seat, with a first fitting part (11) and a second fitting part (12), which are rotatable relative to each other, a clasping ring (13) which - in order to axially hold the two fitting parts (11, 12) together - is fastened to the first fitting part (11) by means of an outer ring section (13b) and embraces the second fitting part (12) by means of an inner ring section (13a), and stops (13g, 15) which serve to limit the relative rotation of the two fitting parts (11, 12) and which comprise at least one blocking stop (15) which is connected to the second fitting part (12) and which is provided on a structural part (3a) fastened to the second fitting part (12), **characterized in that** the stops comprise at least one limiting stop (13g) formed on the clasping ring (13) and **in that** the limiting stop (13g) protrudes outward from the outer ring section (13b) of the clasping ring (13).

2. Fitting according to Claim 1, **characterized in that** the limiting stop (13g) is of hook-shaped design with a part protruding at least radially from the clasping ring (13) and at least one part which protrudes from said part and has a stop surface (13j), which points in the circumferential direction, for the blocking stop (15).

3. Fitting according to Claim 1 or 2, **characterized in that** the limiting stop (13g) is integrally formed on or fastened to the outer ring section (13b) of the clasping ring (13).

4. Fitting according to one of the preceding claims, **characterized in that** the clasping ring (13) has at least one centering section (13c) which extends axially from the outer ring section (13b) and which embraces the first fitting part (11) radially on the outside and partially covers the outer surface thereof.

5. Fitting according to Claims 3 and 4, **characterized in that** the limiting stop (13g) is integrally formed on the outer ring section (13b) of the clasping ring (13) by means of the centering section (13c) as a transition.

6. Fitting according to one of the preceding claims, **characterized in that** the blocking stop (15) is integrally formed on the structural part (3a).

7. Fitting according to one of the preceding claims, **characterized in that** exactly two limiting stops (13g) receive the exactly one blocking stop (15) therebetween in the circumferential direction, or **in that** exactly two blocking stops (15) receive the exactly one limiting stop (13g) therebetween in the circumferential direction.

8. Fitting according to one of the preceding claims, **characterized in that** the outer ring section (13b) is arranged in a plane offset axially with respect to the inner ring section (13a) toward the first fitting part (11), or **in that** the outer ring section (13b) and the inner ring section (13a) merge flat one into the other.

9. Fitting according to one of the preceding claims, **characterized in that** a toothed rim (17) is formed on one of the fitting parts (11, 12) and a toothed wheel (16) is formed on the other of the fitting parts (11, 12), said toothed rim and toothed wheel meshing with each other, as a result of which the two fitting parts (11, 12) are in geared connection to each other, and **in that** a rotatably mounted, revolving eccentric (27) which is driven by a driver (21) is provided for driving a relative rolling movement of toothed wheel (16) and toothed rim (17).

10. Vehicle seat, in particular motor vehicle seat, with a fitting according to one of the preceding claims.

## Revendications

1. Ferrure pour un siège de véhicule, en particulier pour un siège de véhicule automobile, comprenant une première partie de ferrure (11) et une deuxième partie de ferrure (12) qui peuvent tourner l'une par rapport à l'autre, une bague de serrage (13) qui, pour retenir axialement les deux parties de ferrure (11, 12), est fixée à la première partie de ferrure (11) au moyen d'une portion de bague extérieure (13b) et vient en prise par-dessus la deuxième partie de ferrure (12) au moyen d'une portion annulaire intérieure (13a), et des butées (13g, 15) qui servent à limiter la rotation relative des deux parties de ferrure (11, 12) et qui comprennent au moins une butée de blocage (15) connectée à la deuxième partie de ferrure (12), qui est prévue au niveau d'une partie structurelle (3a) fixée à la deuxième partie de ferrure (12), **caractérisée en ce que** les butées comprennent au moins une butée de limitation (13g) réalisée au niveau de la bague de serrage (13) et **en ce que** la butée de limitation (13g) fait saillie vers l'extérieur depuis la portion annulaire extérieure (13b) de la bague de serrage (13).

2. Ferrure selon la revendication 1, **caractérisée en ce que** la butée de limitation (13g) est réalisée sous forme de crochet avec une partie faisant saillie au moins radialement depuis la bague de serrage (13) et au moins une partie faisant saillie depuis celle-ci, avec une surface de butée (13j) pour la butée de blocage (15) tournée dans la direction périphérique.

3. Ferrure selon la revendication 1 ou 2, **caractérisée en ce que** la butée de limitation (13g) est façonnée ou fixée au niveau de la portion annulaire extérieure (13b) de la bague de serrage (13).

4. Ferrure selon l'une quelconque des revendications précédentes, **caractérisée en ce que** la bague de serrage (13) présente au moins une portion de centrage (13c) qui s'étend axialement depuis la portion annulaire extérieure (13b) et qui vient en prise radialement à l'extérieur par-dessus la première partie de ferrure (11) et recouvre en partie sa surface extérieure.

5. Ferrure selon la revendication 3 et 4, **caractérisée en ce que** la butée de limitation (13g) est façonnée au moyen de la portion de centrage (13c) sous forme de transition au niveau de la portion annulaire extérieure (13b) de la bague de serrage (13).

6. Ferrure selon l'une quelconque des revendications précédentes, **caractérisée en ce que** la butée de blocage (15) est façonnée au niveau de la partie structurelle (3a).

7. Ferrure selon l'une quelconque des revendications précédentes, **caractérisée en ce qu'**exactement deux butées de limitation (13g) reçoivent entre elles exactement une butée de blocage (15) dans la direction périphérique, ou **en ce qu'**exactement deux butées de blocage (15) reçoivent entre elles exactement une butée de limitation (13g) dans la direction périphérique.

8. Ferrure selon l'une quelconque des revendications précédentes, **caractérisée en ce que** la portion annulaire extérieure (13b) est disposée dans un plan décalé par rapport à la portion annulaire intérieure (13a) axialement vers la première partie de ferrure (11), ou **en ce que** la portion annulaire extérieure (13b) et la portion annulaire intérieure (13a) se prolongent à plat l'une dans l'autre.

9. Ferrure selon l'une quelconque des revendications précédentes, **caractérisée en ce qu'**au niveau de l'une des parties de ferrure (11, 12) est réalisée une couronne dentée (17), et au niveau de l'autre des parties de ferrure (11, 12) est réalisée une roue dentée (16) qui s'engrènent l'une dans l'autre, de sorte que les deux parties de ferrure (11, 12) soient en liaison d'engrènement l'une avec l'autre et **en ce qu'**un excentrique (27) périphérique, supporté à rotation, entraîné par un élément d'entraînement (21) est prévu pour entraîner un mouvement de roulement relatif entre la roue dentée (16) et la couronne dentée (17).

10. Siège de véhicule, en particulier siège de véhicule automobile, comprenant une ferrure selon l'une quelconque des revendications précédentes.
